# EUROPEAN PATENT APPLICATION

(11) **EP 2 355 285 A1**
(43) Date of publication of application: **10.08.2011**
(21) Application number: 10000926.5
(22) Date of filing: 29.01.2010
(51) Int. Cl.: H02G 15/007, H02G 15/10, G02B 6/38

(54) **Cable sealing and retaining device and cable connection**

(71) Applicant: Tyco Electronics Raychem BVBA, 3010 Kessel-Lo (BE)
(72) Inventor: Kempeneers, Dirk, 3200 Aarschot (BE); Vastmans, Kristof, 3370 Boutersem (DE); Verheyden, Danny Willy August, 3200 Gelrode (DE); Vos, Bart, 2440 Geel (DE); Vandenpoel, Jos, 3545 Halen (BE)
(74) Representative: Grünecker, Kinkeldey, Stockmair & Schwanhäusser Anwaltssozietät

(57) **Abstract**

The present invention relates to a cable sealing and retaining device providing at least two openings through each of which a cable is sealingly guidable, and to a cable termination formed between said two cables, The present invention provides an improved cable sealing and retaining device which is simply shaped, which may sealingly accommodate a connection formable between two cables received by the cable sealing and retaining device and which is capable of keeping away from the connection a tension force acting on the cable in its longitudinal direction. The cable sealing and retaining device (50) comprises at least two cable sealing devices (10) with sealing parts (11), each providing a passageway with an inner seal (14) through which a cable (2) is sealingly guidable, and an outer seal (15) arranged on an outer circumference of the sealing part (11). The cable sealing and retaining device (50) comprises a housing (53) which provides at least two openings (51) with a sealing section (52) arranged inside of the housing (53) and adapted to co-operate with a front section of the sealing part (11) received by the opening (51) to form a sealing between the sealing section (52) and the outer seal (15) coming into contact with the sealing section (52). The cable sealing and retaining device (50) is characterized by a tension support part (56) for bypassing a tension acting in longitudinal direction on the cable (2), wherein the tension support part (56) is provided between the cable sealing devices (10) and having a longitudinal length adapted to bridge a longitudinal distance between the two cable sealing devices (10).

## Description

The present invention relates to a cable sealing and retaining device providing at least two openings through each of which a cable is sealingly guidable, and to a cable termination formed between said two cables.

A cable sealing and retaining device is e.g. known from WO 2007/014385 A2, which finds particular application in the field of telecommunication technology to which the present invention preferably relates.

The known cable sealing and retaining device comprises a housing providing at a free end side, a plurality of adjacently arranged openings, each receiving a cable sealing device comprising a sealing part mountable on a cable for sealingly guiding a cable through said opening. The sealing part comprises on its outer circumference an outer thread for engaging with an internal thread provided adjacent to the opening inside of the housing to be screwable into the housing. The sealing part provides a passageway with an inner seal through which the cable is sealingly guidable. The passageway accommodates a fixation part which is secured on the cable by force closure and which retains the sealing part by means of positive locking. Particularly, the fixation part is formed of a disc-shaped grip means having a central aperture through which the cable extends, wherein the aperture has such a size that the grip means is allowed to grip and, thereby, to be retained on the cable. Further, the fixation part is sandwiched between an abutment surface of the sealing part provided inside the passageway to abut against the fixation part in longitudinal direction and a bolt portion srewable into the passageway to press the fixation part against the abutment surface. Accordingly, a tension force acting on the cable in longitudinal direction is transmitted to the housing by the configuration provided inside the passageway of the sealing part and, further by the thread engagement formed between the cable sealing device and the housing of the cable sealing and retaining device. Thus, the cable sealing and retaining device provides a complex shape for transmitting tension forces. In addition, the housing provides a plurality of openings only at one end side thereof. Thus, the cable sealing and retaining device forms substantially a dead-end connection for a plurality of cables guided into the cable sealing and retaining device. Therefore, the cable sealing and retaining device may not be used for a gateway which may sealingly accommodate a connection formed between two cables which are sealingly guidable into the gateway from opposed longitudinal end sides thereof, wherein the connection is prevented from being affected by a tension force acting on at least one of the cables.

It is an object of the present invention to provide an improved cable sealing and retaining device which is simply shaped, which may sealingly accommodate a connection formable between two cables received by the cable sealing and retaining device and which is capable of keeping away from the connection a tension force acting on the cable in its longitudinal direction.

The object is solved by a cable sealing and retaining device having the features as defined in claim 1. The inventive cable sealing and retaining device comprises at least two cable sealing devices with sealing parts, each providing a passageway with an inner seal through which a cable is sealingly guidable. An outer seal is arranged on an outer circumference of the sealing part. Preferably, the inner seal is adapted to provide secure the sealing part on the cable at least in longitudinal direction by force closure. Particularly, the inner seal may be ring-shaped and may have an outer diameter larger than an outer diameter of the passageway accommodating the inner seal. Thereby, the inner seal may exert a pressure in radial direction, which is a direction transverse to the longitudinal direction of the cable and the passageway, respectively, onto the cable and against the part of the sealing part forming the passageway and supporting the inner seal. Based on said radial pressure, tolerances between the cable and the inner seal may be compensated to improve a sealing performance therebetween. Furthermore, the sealing part may be securable in longitudinal and in circumferential direction against the cable.

The cable sealing and retaining device has a housing which provides at least two openings with a sealing section arranged inside of the housing and adapted to co-operate with a front section of the sealing part received by the opening to form a sealing between the sealing section and the outer seal coming into contact with the sealing section. The outer seal may be preferably ring-shaped and, further preferably, may have an outer diameter larger than an inner diameter of the sealing section co-operating with the outer seal. Thereby, the sealing part may be securable to the housing by a radial pressure exerted by the outer seal in a way similar to the inner seal.

The cable sealing and retaining device provides a tension support part for bypassing a tension acting in a longitudinal direction on the cable, wherein the tension support part is provided between the cable sealing devices and having a longitudinal length adapted to bridge a longitudinal distance between the two cable sealing devices. A tension in longitudinal direction of the cable, may, for instance, occur by pulling the cable in longitudinal direction. Further, the housing of the cable sealing and retaining device may be preferably adapted to accommodate a connection formable between two cable terminations of the cables guided by the cable sealing devices into the housing. The connection may be preferably formed by connectors connected to longitudinal ends of the cables, respectively.

According to one preferred embodiment, the tension support part may be formed of the housing itself, which may be preferably sleeve-shaped with the openings formed at longitudinal end sides of the housing. Further, the inner seal and the outer seal may provide a shape with inner and/or outer diameters as described above. Due to the pressure acting between the inner seal, the outer seal and the housing, respectively, the tension acting on the cable in longitudinal direction may be transmitted to the housing at the side at which the cable enters the housing and, then, the tension may be transferred by the housing, which is preferably made of injection moulding of a plastic material, to the cable guided at the opposed longitudinal end side of the housing, wherein the tension may be transmitted due to the connection to the other cable. Accordingly, the connection between the cables may be bypassed. Alternatively, the tension support part may be preferably formed of an interface with longitudinal ends adapted to be arranged in the passageway of the sealing part between the inner seal and the guidable cable. For ensuring sealing performance, the longitudinal ends may be preferably formed of a sealing material as the inner seal and the outer seal, which are preferably made of rubber, gel or mastic and the like. Alternatively, the longitudinal ends may be preferably adapted to be arranged between the outer seal and the sealing section. The interface may preferably be bar-shaped with longitudinal ends providing a cross-section adapted to be arrangeable between the inner seal and the cable or between the outer seal and the sealing section in a way as described above. Thus, at least one interface may be preferably provided.

In a further preferred embodiment, the tension support part and the cable sealing devices are connectable to each other at their longitudinal ends. Preferably, the tension support part denotes a single element having longitudinal end sides adapted to co-operate with a corresponding longitudinal end side of each cable sealing device. Particularly, the connection may be formed by means of positive locking acting at least in longitudinal direction such as interlocking means or a bolted connection, for instance. More preferably, the tension support part is connectable to the cable sealing devices by the interlocking means. In other words, the tension support part provides at its longitudinal end sides, interlocking means cooperating with corresponding interlocking means formed at the longitudinal end sides of the cable sealing device facing each other. Thereby, a positive locking in longitudinal direction of the cable can be obtained. The positive locking further improves the connection between the tension support part and each cable sealing device and further improves the bypassing of the tension force acting in longitudinal direction on the cable.

Further preferable, the tension support part is connectable to the cable sealing device, i.e. to each cable sealing device at the longitudinal end sides by a key-and-slot connection, wherein one of the tension support part and of the cable sealing devices comprises the key and wherein the other one thereof has the slot for receiving the key, wherein the key and the slot extend in circumferential direction of the cable sealing device and the tension support part, respectively. Hence, the tension support part may be preferably secured to the cable sealing device from a radial outer side thereof. Thereby, a simple achievable and reliable positive locking in longitudinal direction can be obtained between the tension support part and the respective cable sealing devices. Further preferable, the tension support part has a length corresponding to a distance formed between facing longitudinal end sides of the cable sealing devices, wherein the key or slot provided with the cable sealing devices forms part of a protrusion projecting from the longitudinal end side of the cable sealing device. Further preferable, at least two key-and-slot connections are formed in an opposing manner at each longitudinal end side of the tension support part and the cable sealing device, respectively. The connection therebetween can be further improved thereby. In addition, as the key or slot provided with the cable sealing device forms part of a protrusion projecting from the longitudinal end side of the cable sealing device, the tension support may be formed with a smaller length in longitudinal direction to be provided between longitudinal end surface sides of the cable sealing devices from which the protrusion projects. Thereby, the tension support part may be preferably formed so as to be provided within an outer diameter of the cable sealing device then viewed in longitudinal direction. In other words, in an assembled state of the tension support part with the cable sealing devices, a distance or radius of the tension support part ranging from the axis of the cable sealing device, which runs in parallel with the longitudinal direction of the cable, toward an outer surface of the tension support part is equal or smaller than a radius or distance of the cable sealing device ranging from said axis in radial direction toward an outer surface of the cable sealing device. Thereby, the housing can be formed with a smaller outer diameter, since only the outer diameter of the cable sealing device needs to be considered.

In a further preferred embodiment, the tension support part is half-shell-shaped and provides a support section for radially supporting cable connectors forming the connection between the cable terminals of the cables, respectively. According thereto, the connection formed by the connectors can be also stabilized in radial direction of the cable sealing and retaining device.

According to a further preferred embodiment, the tension support part provides a middle support section for supporting an adapter connectable between the cable connectors wherein the middle support section is separated from the support section by a step portion formed at a change-over therebetween, wherein the step portion provides a support surface for the cable connector and an abutment surface extending transverse to the support surface for abutting against a longitudinal end side of the adapter. Thus, in case the cable connectors are connected to each other via an adapter, for instance, when two male or female connectors need to be connected to each other, the tension support part radially supports the whole connection and stabilizes said connection in radial direction and further in longitudinal direction of the connection, as the adapter abuts against the step portion provided at an inner circumferential surface side of the tension support part. Consequently, in case of a tension force acting on the cable in longitudinal direction, the connection is further supported in longitudinal direction by the step portion of the tension support part, which may further compensate manufacturing tolerances between the key-and-slot connection between longitudinal end sides of the tension part and the respective cable sealing devices.

In a further preferred embodiment, the cable sealing device comprises a fixation part arranged at a front end of the sealing part, wherein the fixation part is C-shaped to be radially mountable on the cable and comprises a first securing means connectable to a second securing means provided with the sealing part. More preferable, the fixation part may be adapted to be secured on the cable or on attaching parts provided with the cable to retain the sealing part in longitudinal direction of the cable. Thereby, the securing of the cable sealing device to the cable can be further improved. Further, a securing feature can be separated from a sealing feature, wherein the securing feature referring to a securing of the cable sealing device to the cable may be assigned to the fixation part and the sealing feature relating to a sealing between the cable sealing device and the cable and between the cable sealing device and the housing may be assigned to the sealing part. Thus, if one of the features is insufficient, only the respective part to which the feature is assigned may be required to be replaced.

More preferable, the fixation part is connectable to the tension support part. In other words, the fixation part is provided between the sealing part and the tension support part. Thus, not only the sealing part can be retained by the fixation part but also the tension support part may be retained by the fixation part securable on the cable. Further preferable, the fixation part is adapted to be radially mountable on outer positive locking faces of an attaching part having a connection portion to which strain relief elements provided with the cable are attachable, wherein the fixation part provides inner abutment faces adapted to cooperate with the outer positive locking faces so as to provide a positive locking therebetween. Thereby, a reliable securing of the cable sealing and retaining device to the cable can be achieved.

For exemplary explaining a structure of an attaching part providing positive locking faces to which the fixation part is preferably mountable, a shape of a commonly known attaching part as described in WO 2007/039585 A1 is used. Particularly, the attaching part has a middle section of a polygonal cross-sectional shape providing a plurality of flat surfaces at an outer circumference of the attaching part, wherein said flat surfaces are sandwiched in longitudinal direction of the attaching part by flanges protruding from said flat surfaces transverse to said longitudinal direction. In general, an attaching part commonly known in the technical field of telecommunications technology has in a majority of cases a section providing a circumferential groove or a plurality of grooves arranged successively with a distance therebetween in circumferential direction of the attaching part. The bottom of the groove section may then form the positive locking face for providing a positive locking in circumferential direction of the attaching part by means of abutment there against, wherein the wall sections defining the groove in longitudinal direction thereof may form the positive locking faces providing a positive locking in longitudinal direction by abutting there against. As described above, the surfaces may preferably have another shape than a flat shape. Alternatively or in addition thereto, the attaching part may be preferably provided with at least one pin-like protrusion projecting from an outer circumference or with at least one pin-like receiving hole formed in the outer circumference, wherein the fixation part may be provided with an associated pin-like receiving hole or a pin-like protrusion, accordingly.

According to a further preferred embodiment, the tension support part is connectable to the attaching part. Particularly, in a secured state of the cable sealing device on the cable, a longitudinal end surface side of the attaching part at a front side of the fixation part is exposed at least in longitudinal direction and comprises interlocking means having a configuration as described above, wherein said interlocking means project from the longitudinal free end side of the attaching part in longitudinal direction and are preferably arranged at a radial end section of the attaching part. Further preferable, the attaching part comprises at least two positive locking means at opposing radial sides on the longitudinal free end side of the attaching part, wherein the attaching part additionally has at a radial inner side between the interlocking means a connection portion for securing a connector thereto. Thus, the connector securable to the attaching part may be disposable between the interlocking means and may extend in parallel thereto from said attaching part. Hence, in case of need, the cable sealing and retaining device may be provided without the fixation part.

In a further preferred embodiment, the cable sealing and retaining device comprises at least two retaining elements, each being associated to the openings formed in the housing and adapted to encompass the cable. Thereby, the cable is at least partially surrounded by the retaining element so as to provide a positive locking on the cable in radial direction thereof, i.e. in a direction transverse to the longitudinal direction of the cable. The retaining element may preferably be clamped on the cable. In other words, the retaining element may be adapted to apply in its mounted state on the cable, a pressure in radial direction of the cable, whereby the retaining element can be preferably secured to the cable in circumferential and longitudinal direction thereof.

Alternatively, the retaining element is preferably adapted to be mountable on securing formations formed at a rear end of the sealing part and being provided adjacent to longitudinal end sides of the housing. The securing formations formed at the rear end of the sealing part project from the longitudinal end side of the housing, i.e. from the opening of the housing towards an outside of the housing to be engageable from a radial outer side. Further preferable, the retaining element may provide a wrap-around shape to be releasably mountable on the cable or on the securing formations of the sealing part. In the sense of the present invention, a wrap-around shape is obtained by a part which provides two end portions which may be brought towards each other until a determined distance between the tow end points in circumferential direction is achieved or which may be connected to each other or which may overlap with respect to each other in circumferential direction to form a thereby surrounded section. For instance, a part having a C-shape, a U-shape, a V-shape or an elastic straight portion, being bendable around a further part, provide a wrap-around shape.

Based on the provision of the retaining elements, the securing of the cable sealing device to the housing can be further improved.

In a further preferred embodiment of the present invention, the housing is sleeve-shaped. Further preferably, the at least two openings are provided in an opposing manner, i.e. one opening is assigned to one longitudinal end side of the sleeve-shaped housing. Thereby, a simple shaped housing can be provided for sealingly accommodating for instance the connection formable between the two cables.

Further preferable, the housing is projected by two elongations extending in parallel from one opening in longitudinal direction of the cable end forming a recess portion therebetween adapted to receive one retaining element. According thereto, the housing may be secured to the cable sealing device or to the cable in circumferential direction of the cable.

According to a further preferred embodiment, the retaining element is formed of a clip element with parallel extending legs elastically movable towards each other and forming a distance therebetween which is smaller than an outer diameter of the cable or of the securing formation to which the retaining element is adapted to be mountable, respectively. In particular, with respect to the outer diameter of the cable or of the outer diameter of the securing formations, the clip element provides a pre-tension in radial inner side direction of the cable in a mounted state. Specifically, by mounting the retaining element onto the cable or on the securing formations, the elastically movable legs are moved away from each other, whereby a pressing force on the cable or on the securing formations of one elastically movable leg towards the other is applied. Thereby, the clamp feature of the clip element is achieved. The clip element may provide a reliable securing of the housing against the cable sealing device so as to prevent a movement of the housing with respect to the connection of two cable terminations formable inside the housing.

According to a further aspect of the present invention, a cable connection formed between two cables is provided, wherein a cable sealing and retaining device as described above is used in order to reliably bypass a tension force from one cable to a further cable without affecting a cable connection formable therebetween.

The present invention will now be described in further detail by referring to preferred embodiments depicted in the accompanying drawings, In these drawings:
- Figs. 1A-1 D: show a perspective side view of a cable sealing device according to one embodiment in a disassembled and an assembled state;
- Figs. 2A and 2B: show a perspective side view of a cable sealing and retaining device according to one embodiment in a disassembled and assembled state with the cable sealing device as shown in Fig. 1 D;
- Fig. 3: shows a cross-sectional view of the cable sealing and retaining device with the cable sealing device as shown in Fig. 2B;
- Figs. 4A-4D: show a perspective side view of a cable sealing and retaining device according to another embodiment in a disassembled and assembled state with the cable sealing device as shown in Fig. 1D;
- Figs 5A-5E: show a perspective side view of a cable sealing and retaining device according to a further embodiment in a disassembled and assembled state with two cable sealing devices;
- Fig. 6: shows a cross-sectional view of the housing shown in Fig. 5E;
- Figs. 7A-7C: show a perspective side view of a fixation part of a cable sealing device provided with the cable sealing and retaining device shown in Figs. 5A-5E, in a pre-installed manner on a cable without and with a sealing part accommodating a ring part;
- Fig. 8: shows a perspective side view of a cable connection between two cable sealing devices according to a further embodiment usable for a cable sealing and retaining device as shown in Figs. 5A to 5E;
- Fig. 9: shows a perspective side view of a cable sealing and retaining device according to a further embodiment in a disassembled with two cable sealing devices according to a further embodiment connected to each other; and
- Fig.10: shows a perspective side view of a cable sealing device according to another embodiment in an assembled state,

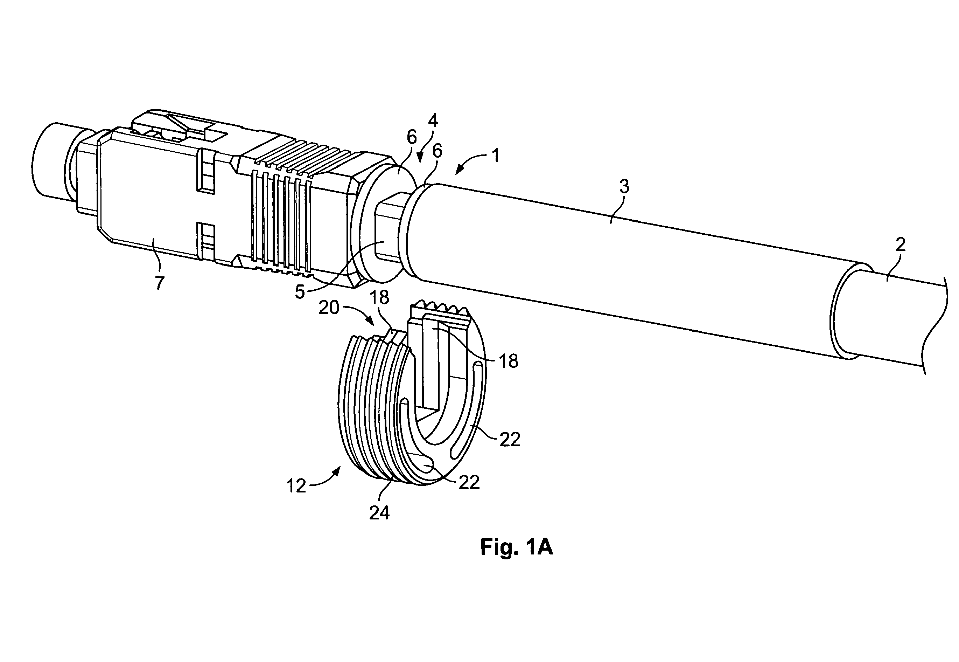

Figs. 1A to 1D show a perspective side view of a connectorized cable 1 to which the cable sealing device 10 according to an embodiment is attached. Particularly, Fig. 1A shows the connectorized cable 1 which comprises a cable 2 fixed to a connector 7 by an attaching part 4. The connection of the cable 2 to the connector 7 via the attaching part 4 is performed as known e.g. from WO 2007/039585 A1. Accordingly, the attaching part 4 made of a metal component comprises a connection portion (not shown) on which strain relief elements (not shown) provided with the cable 2 are attached and secured by means of a metal crimp (not shown). A heat shrink tube 3 is provided on the metal crimp and the cable 2 to seal the connection therebetween. The attaching portion 4 comprises outside the cable 2 two ring-shaped flanges 6, each providing surfaces directing in longitudinal direction, wherein the inner surfaces sandwich outer circumferential flat surfaces 5 formed by a polygonal shaped body (here a square) and connected to each other in circumferential direction by tapered edges. The surfaces of the flanges 6 and the outer circumferential flat surfaces 5 form positive locking faces. The heat shrink tube 3 ends at one surface side of the flange 6 arranged in longitudinal direction of the cable 2 between the body 5 and the connection portion of the attaching part 4. In this context, an axial direction corresponds to the longitudinal direction of the cable 2, and a radial direction refers to a direction running transverse thereto. A circumferential direction relates to a direction running around the longitudinal direction. The flange 6 provided between the heat shrink tube 3 and the outer circumferential flat surface 5 is disc-shaped and has an outer diameter equal or smaller than an outer diameter of the heat shrink tube 3, thereby providing an abutment surface for the axial end side of the heat shrink tube 3. The cable 2 abuts in axial direction against the connection portion on which the strain relief elements are attached. The opposing flange 6 has a diameter equal or smaller than a diameter of the connector 7 being an SC connector and providing an abutment surface for an axial end side, i.e, a rear side of said connector 7 in axial direction of the connectorized cable 1.

As shown in Fig. 1A, a fixation part 12 forming part of the cable sealing device 10 is adapted to be attachable to the flanges 6 sandwiching the positive locking faces 5. The fixation part 12 is formed of a C-shape and comprises at its outer circumference, an external thread 24. The inner circumference of the fixation part 12 is substantially C-shaped and is divided in its axial direction into three sections. An outer circumference of the axial outer sections adopt a shape of an outer circumference of the flanges 6, respectively. Particularly, each outer section has a ring-segment-shaped bottom formed by a radius corresponding to a radius of the associated flange 6 and is adapted to receive the respective flange 6. From the circumferential ends of said ring-segment-shaped bottom, extend each a straight surface ending at the windings forming the external thread 24. Moreover, the middle section sandwiched by the outer sections is basically U-shaped and adopts the surface profile of the positive locking face 5. The middle section has a width in axial direction of the fixation part 12 corresponding to an axial length of the positive locking face 5 sandwiched by the flanges 6. Particularly, the legs forming the U-shape of the middle section protrudes from the inner circumference of the fixation part 12 such, that the axial end surfaces of the middle section form abutments surfaces for the axial surfaces of the flanges 6 facing the positive locking face 5. Hence, by mounting the fixation part 12 on the attaching part 4, the fixation part 12 is retained in axial direction of the attaching part 4. Additionally, the legs of the middle section extending from the bottom toward the opening 20 form each at their radial outer surface sides a step portion 18 providing thereby first securing means. The first securing means 18 are embedded in the opening 20. Particularly, the end faces of the legs directing to a radial outer side of the fixation part 12 and accommodating the first securing means 18 are arranged at a radial inner side of the fixation part 12 as a bottom of the windings which forms the external thread 24.

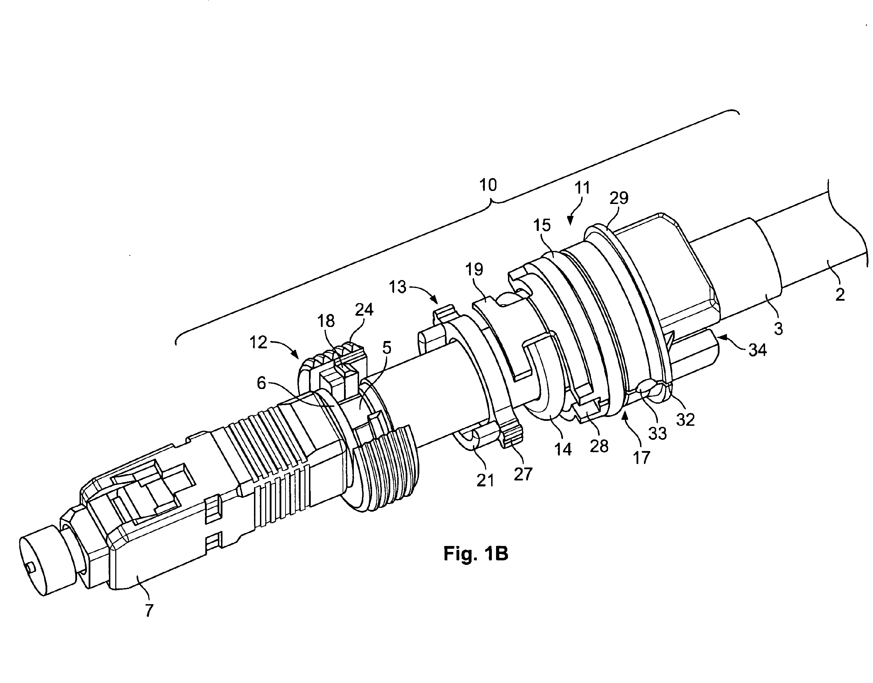

Fig. 1B shows the cable sealing device 10 mounted in its disassembled state on the connectorized cable 1. The cable sealing device 10 comprises the fixation part 12, a sealing part 11 and a ring part 13 provided between the fixation part 12 and an inner seal ring 14. The ring part 13 has longitudinal protrusions 21 projecting from an axial end surface directing to the fixation part 12 to be received in associated notches 22 formed on an axial end surface side of the fixation part 12 directing to the ring part 13, respectively (see Fig. 1A).The ring part 13 further comprises two circumferential projections 27 protruding radially from an outer circumferential surface of the ring part 13 in opposing directions toward an outside. Said circumferential projections 27 cooperate with receptacles 28 provided at respective positions in an axial end surface at a front side of the sealing part 11. The receptacles 28 are shaped correspondingly to the circumferential projections 27 to fully receive the circumferential projections 27 in the assembled state of the cable sealing device 10 and to provide a locking between the fixation part 12 and the ring part 13 in circumferential direction. The circumferential projections 27 provide on its radial surface crush ribs for compensating manufacturing tolerances. The receptacles 28 are opened towards a radial outer direction to expose the crush ribs of the rectangular protrusions in the assembled state.

Figs. 1B to 1D show the sealing part 11 which is formed substantially of a sleeve having a cylindrical shape at one longitudinal end side relating to the front side, and a rectangular shape at the opposed longitudinal side, referring to a rear side of the sealing part 11, wherein the front side portion merges with the rear side portion at a flange portion 29. The flange portion 29 has an outer diameter larger than an outer diameter of the front side portion providing an outer support portion 17 of the sealing part 11. Said outer support portion 17 has a circumferential groove receiving an outer seal ring 15. The outer seal ring 15 slightly protrudes radially from the outer circumferential surface of the outer support portion 17 in its received state in order to come into contact with a sealing section 42; 52; 62 of a cable sealing and retaining device 40; 50; 60 as described further below. The front side portion of the sealing part 11 comprises the receptacles 28 for receiving the circumferential projections 27 of the ring part 13. At the front side between the receptacles 28, second securing means 19 protrudes axially in front side direction, i.e. away from the flange portion 29 and the rear side.

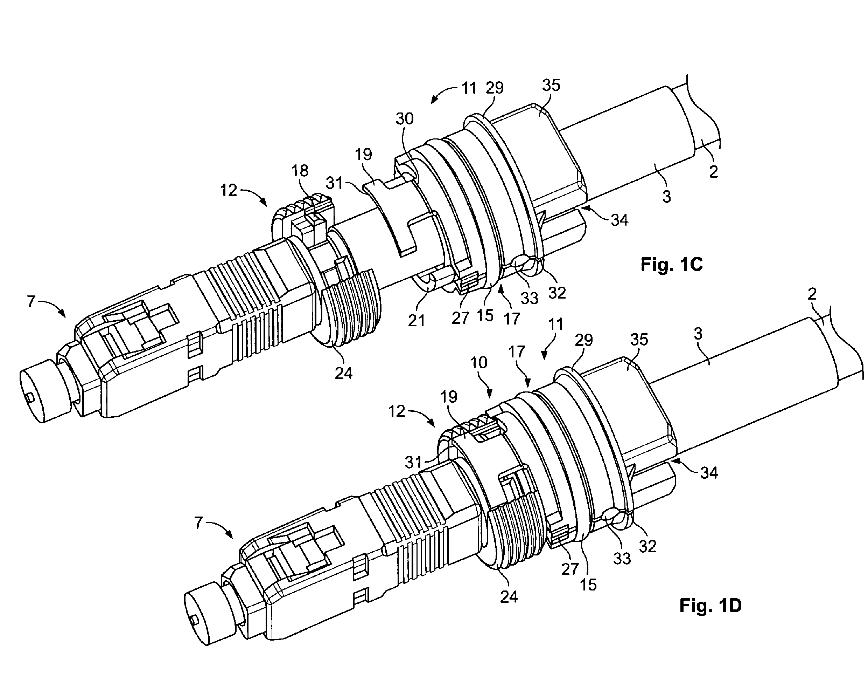

The second securing means 19 is hammer head shaped, wherein the hammer head projects in circumferential direction the opening 20 defined by the first securing means 18. The hammer head has a circumferential width corresponding to a circumferential opening width defined in circumferential direction by the end faces of the external thread 24. As particularly shown in Fig. 1D, the axial length of the second securing means 19 corresponds to an axial length of the fixation part 12. In the assembled state of the cable sealing device 10, the hammer head is fitted in the circumferential opening defined by the external thread 24. Further, an axial end surface of the second securing means 19 forms with an axial end surface of the fixation part 12, a common surface. On a radial inner side of the second securing means 19, which is the side directing to the axis of the cable sealing device 10, ratchets are provided which engage the step-shaped first securing means 18 of the fixation part 12 in the assembled state of the cable sealing device 10. Thereby, the sealing part 11 is secured to the fixation part 12 in axial direction. Further, as the second securing means 19 is fitted in the assembled state of the cable sealing device 10 in the circumferential opening defined by the external thread 24, circumferential end faces of the second securing means 19 abut against circumferential end surfaces of the external thread 24, whereby the securing of the sealing part 11 in circumferential direction is further improved. Additionally, the first securing means 18 (Fig. 1 C) and the second securing means 19 comprise sliding surfaces formed by tapered edges provided at the sides of the step-formed first securing means 18 facing the second securing means 19 and at the ratchets of the second securing means 19 facing the first securing means 18, respectively. Moreover, the second securing means 19 has a circumferential extending incision 30 provided at the transition from the outer support section 17 to the second securing means 19 by which the second securing means 19 is improved to be elastically pivotable about incision 30 in radial direction of the sealing part 11. By connection of the sealing part 11 to the fixation part 12, the second securing means 19 slides with its tapered edges over the tapered edges of the first securing means 18, wherein the ratchets of the second securing means 19 engage behind the radial extending surface of the step-formed first securing means 18 in the assembled state of the cable sealing device 10 to axially fix the sealing part 11 to the fixation part 12. The second securing means 19 has a further tapered section formed on the radial inner side at a longitudinal free end side, whereby the longitudinal free end side provides a handleable tip end 31 to allow manually disassembling of the sealing part 11 from the fixation part 12 by lifting the tip end 31 in radial outside direction and, thereby, releasing the second securing means 19 from the first securing means 18,

The sealing part 11 has a breakage zone formed by an incision 32 extending on the circumferential outer surface of the sealing part 11 in longitudinal direction. The sealing part 11 provides a cavity 33, which intersects the breakage zone 32 in the area of the outer support portion 17. The breakage zone 32 has such a depth that the sealing part 11 can be released from the connectorized cable 1 by breaking the sealing part 11 along the breakage zone 32. The breakage may be conducted e.g. by means of a lever insertable into the cavity 33. As shown in Figs. 1B to 2A, the breakage zone 32 extends axially over the whole longitudinal length of the sealing part 11. That is, the breakage zone 32 extends from the flange portion 29 towards the front side until the receptacles 28, and from the flange portion 29 towards the rear side of the sealing part 11 which is basically U-shaped and forming securing formations 35 on an outer circumference with a gap 34 provided in elongation of the breakage zone 32.

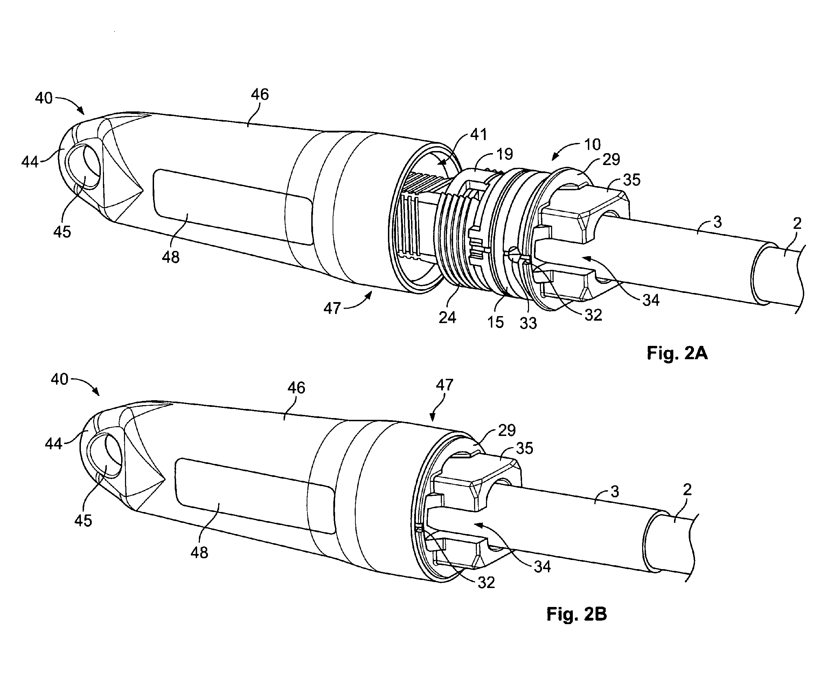

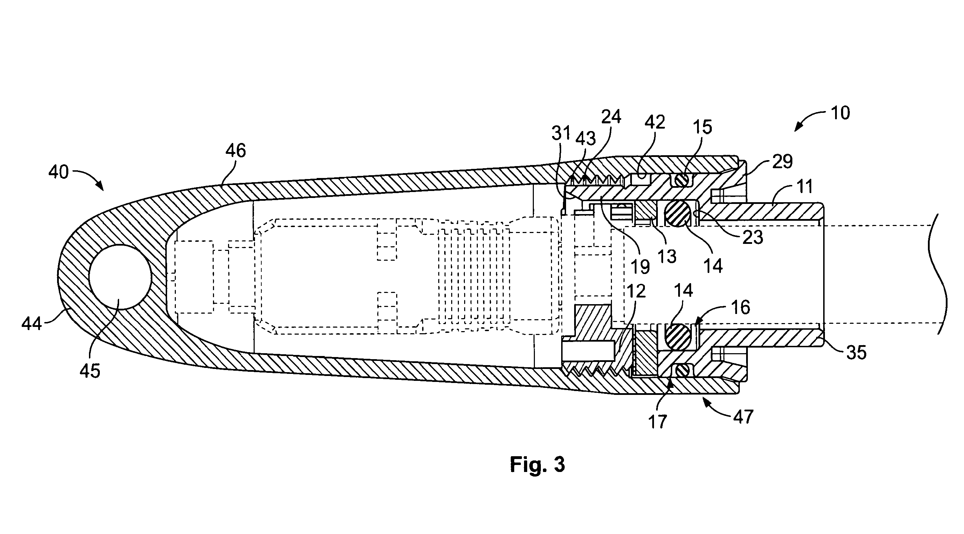

Figs. 2A and 2B show a perspective side view of a cable sealing and retaining device 40 according to an embodiment in its disassembled and assembled state with the cable sealing device 10. Fig. 3 shows a cross-sectional view in longitudinal direction of said cable sealing and retaining device 40 connected to the cable sealing device 10.

The cable sealing and retaining device constitutes a pulling cap 40 formed by injection moulding plastic material and providing an opening 41 at one longitudinal end side, which denotes the rear side and a pulling attachment member 44 at its opposed longitudinal end side, which constitutes the front side. The pulling attachment member 44 is provided at the front side of the housing 46 and forms a round-shaped tip end for the pulling cap 40, wherein a pulling eye formed of a through-hole 45 is provided transverse to the longitudinal direction of the pulling cap 40. Said pulling attachment member 44 with its pulling eye 45 is provided for being attachable to a pulling device to pull the pulling cap 40 through a duct.

The pulling cap 40 provides a housing 46 of a cylindrical shaped single body. The housing 46 is further conical shaped in longitudinal direction of a sleeve portion 47 provided at a rear end side of the housing 46 and forming the opening 41 having the largest diameter. The housing 46 has flat surface portions 48 on its outer circumference at opposing sides. The flat surface portions 48 of a rectangular shape extend in longitudinal direction by a predetermined length and in circumferential direction by a predetermined width. The flat surface portions 48 provide working surfaces engageable for instance with engaging surfaces of a tool kit like a screw-wrench for supporting fixation of the pulling cap 40 with the cable sealing device 10. The housing 46 has a longitudinal length capable of accommodating inside of the housing 46 in an accommodating section 49 the connector 7 and the parts of the cable sealing device 10 ranging from the fixation part 12 to the flange portion 29. Particularly, the longitudinal free end surface of the sleeve portion 47 surrounding the opening 41 provides an abutment surface for the flange portion 29 in longitudinal direction such that the longitudinal surface of the flange portion 29 abuts against the abutment surface of the sleeve portion 47 in the assembled state of the pulling cap 40 with the cable sealing device 10, whereby the securing formations 35 at the rear side of the cable sealing device 10 extend from the rear end side of the pulling cap 40 in longitudinal direction. Accordingly, the securing formations 35 can be also used for supporting the fixation of the pulling cap 40 with the cable sealing device 10 by means of a screw-wrench as described above. The sleeve portion 47 provides a sealing section 42 arranged adjacent to the opening 41 to be sealingly contacted in the assembled state by the outer seal 15 as shown in Fig. 3. Further inside of the housing 46 adjacent to the sealing section 42, the housing 46 comprises an internal thread 43 cooperating with the external thread 24 of the fixation part 12. Particularly, the cable sealing device 10 is screwable into the pulling cap 40 by engagement of the internal thread 43 and the external thread 24.

Alternatively to the thread engagement, a bayonet mount (not shown) may be provided, wherein a male pin and a female slot may be appropriately positioned at the fixation part 12 and the sleeve portion 47, respectively. Exemplary, the internal and external threads 43, 24 may be replaced with the pin and the slot, respectively, wherein one of the fixation part 12 and the sleeve portion 47 provide the pin and the other one the slot. The insertion depth of the cable sealing device 10 is defined by the abutment of the flange portion 29 with the abutment surface of the sleeve portion 47 surrounding the opening 41 and/or, for instance, by the number of windings provided with the internal and/or external thread 43, 24, respectively, whereby a predetermined longitudinal length of said threads 43, 24 is defined.

With reference to Fig. 3, a configuration of the inner sealing portion 16 of the sealing part 11 according to this embodiment will now be described. The sealing part 11 provides a passageway through which the cable 2 covered by the heat shrink tube 3 is guided. The passageway is substantially divided into a front section and a rear section. The rear section extends from the rear side of the sealing part 11 towards the front side until a step provided at a position radially below the outer support portion 17 is reached, wherein said rear section has an inner diameter slightly larger than an outer diameter of the heat shrink tube 3 to allow guiding of the cable 2 with the heat shrink tube 3 provided at the end thereof through said passageway. The front section arranged in longitudinal direction adjacently to the rear section extends from the rear section to the front side of the sealing part 11, i.e. from the step to a transverse plane containing the circumferential incision 30 provided at the transition between the outer support portion 17 and the longitudinal end of the neck of the hammer-head shaped second securing means 19. The front section forms the inner support section 16. Said inner support section 16 has an inner diameter larger than an inner diameter of the rear section. The step provided between the rear and front sections forms a cavity 23 opened to the front side, i.e. to the side facing the fixation part 12, and to the passageway to accommodate the inner seal ring 14. The inner seal ring 14 is mounted on the heat shrink tube 3 which forms part of the cable 2. Due to the connection portion of the attaching part 4 extending below the inner seal ring 14, said inner seal ring 14 is further supported by the attaching portion 4. Moreover, the inner seal ring 14 has an outer diameter larger than an inner diameter of the cavity 23. Hence, the inner seal ring 14 applies a pressing force in radial directions in a received state in the cavity 23, i.e. toward the passageway and toward the sealing part 11. Due to the dimension of the inner seal ring 14 with respect to the cavity 23, the sealing part 11 is further securable on the cable 2 by the pressure applied by the inner seal ring 14 in its received state. Moreover, tolerances between the inner seal ring 14 and the cable 2 may be compensated to obtain a reliable sealing therebetween.

In the assembled state of the cable sealing device 10, by which the fixation part 12 and the sealing part 11 are secured to each other, the ring part 13 forms an abutment for the inner seal ring 14 at its front end to prevent a flowing of the inner seal ring 14 material, being a material suited for obtaining sealing performance such as rubber, gel, mastic and the like, out of the cavity 23.

A connection of the cable sealing device 10 with the connectorized cable 1 can be achieved as follows. At first, the sealing part 11 with the inner seal ring 14 and the ring part 13 are mounted on the cable 2 not provided with the attaching part 4. Then, the axial end of the cable 2 is connected to the attaching part 4 by a common connection method using a crimp means and a heat shrink tube 3. Subsequent thereto, the fixation part 12 is mounted on the positive locking faces 5, 6 of the attaching part 4. Particularly, the fixation part 12 is secured to the positive locking faces 5, 6 from a radial outer side. The fixation part 12 is thereby retained in circumferential direction and in longitudinal direction. The ring part 13 is then moved in longitudinal direction towards the fixation part 12 and secured thereto by inserting the longitudinal protrusions 21 into the notches 22. Thus, the ring part 13 is secured against the fixation part 12 in circumferential direction. Thereafter, the sealing part 11 is secured to the fixation part 12 by moving the sealing part 11 in longitudinal direction, i.e. in its axial direction towards the fixation part 12 and connecting the second securing means 19 to the first securing means 18. The sealing part 11 is retained by the fixation part 12 in longitudinal direction by means of positive locking formed between the first and second securing means 18, 19 in longitudinal direction and in circumferential direction by means of positive locking formed between the circumferential end surfaces of the fixation part 12 and the second securing means 19. Furthermore, the longitudinal protrusions 21 of the ring part 13 are received by the notches 22 of the sealing part 11, whereby a positive locking in circumferential direction is achieved between the sealing part 11 and the ring part 13. Accordingly, the sealing part 11 is secured in circumferential direction by the positive locking formed between the longitudinal protrusions 21 and the notches 22 and further by the first and second securing means 18, 19, wherein the fixation part 12 is fixed on the attaching part 4 in circumferential and in longitudinal directions. Hence, the cable sealing device 10 is secured against the attaching part 4 in circumferential direction and in longitudinal direction in its assembled state. Moreover, the inner seal ring 14 is retained in the cavity 23 of the sealing part 11 in longitudinal direction toward the fixation part 12 by the ring part 13. At last, in case of need, the connector 7 is connected to the attaching part 4. However, the connector 7 does not necessarily need to be mounted on the attaching part 4. The connector 7 may be mounted on the attaching part 4 at any stage after fixing the attaching part 4 to the cable 2.

The cable sealing device 10 is removable from the connectorized cable 1 in a reversed order. Thereby, the sealing part 11 may be removed from the connectorized cable 1 by breaking the breakage zone 32 and by bending the opened sealing part 11 so as to be removable from the cable 2. Thereby, the connection of the connectorized cable 1 formed between the connector 7, the attaching part 4 and the cable 2 does not need to be necessarily opened.

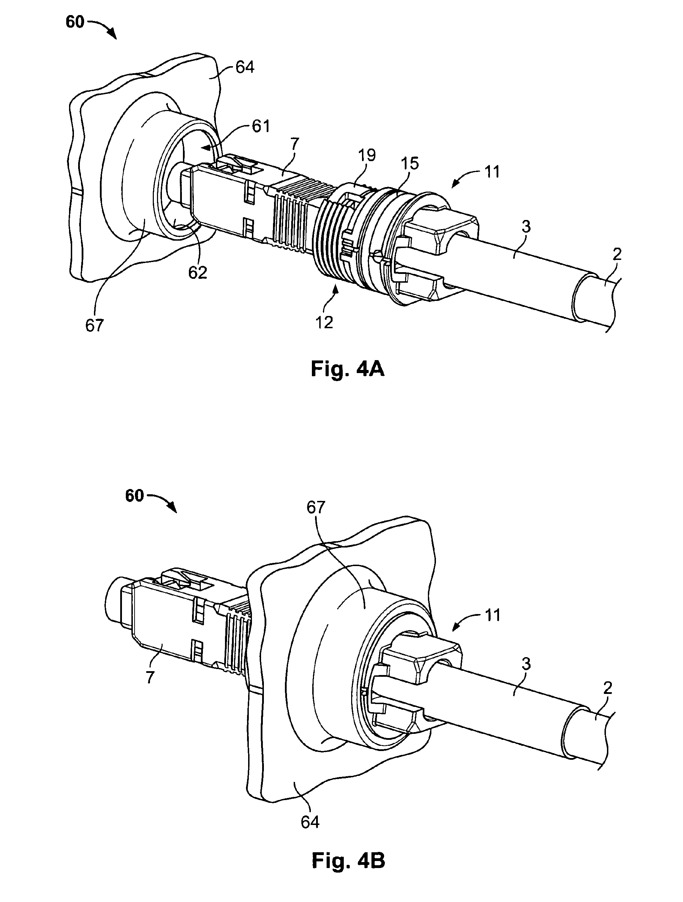

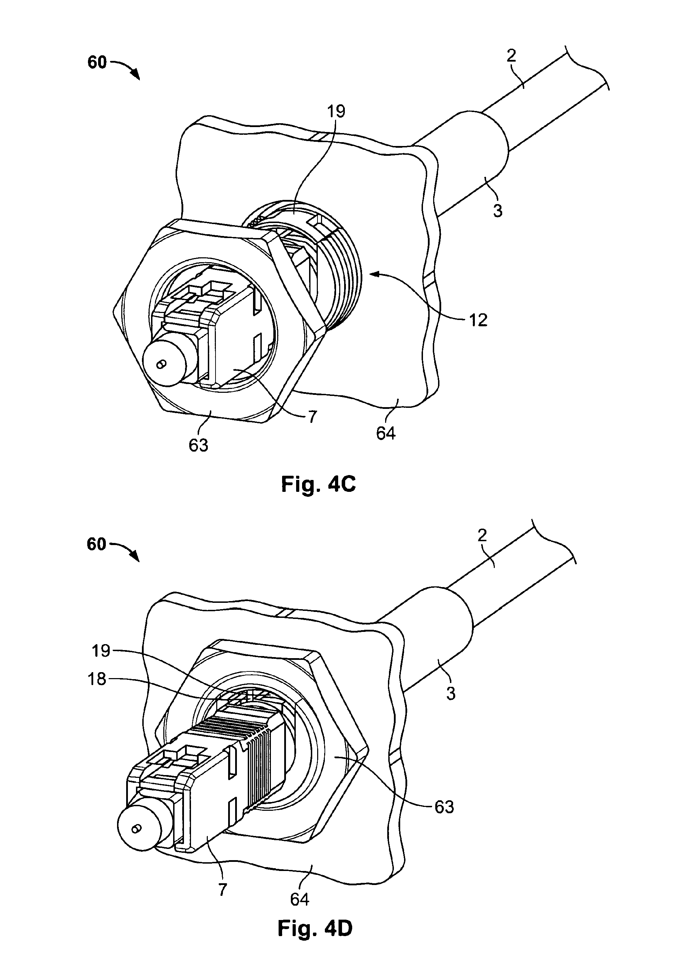

Figs. 4A to 4D show a perspective side view of a cable sealing and retaining device 60 according to another embodiment in a disassembled and assembled state with the cable sealing device 10. The cable sealing and retaining device 60 forms a wall mounting 64 formed integrally with a sleeve portion 67 extending perpendicular from a front side surface of the wall mounting 64. The sleeve portion 67 provides a through-hole extending through the wall mounting 64 and forms at one longitudinal end side an opening 61 which receives the cable sealing device 10. The sleeve portion 67 has a length in longitudinal direction corresponding to a longitudinal length of the outer support portion 17 supporting the outer seal 15. Further, the sleeve portion 67 merges at a rear side of the wall mounting 64, which is the side opposing the side from which the sleeve portion 67 extends, with said rear side surface of the wall mounting 64 so as to form a common rear surface.

In an assembled state of the cable sealing and retaining device 60 with the cable sealing device 10, the fixation part 12 projects with the fixation means 24 from the rear side of the wall mounting 64 to be accessible from said rear side. The cable sealing and retaining device 60 further comprises a polygonal-shaped lock nut 63 which is screwed on the fixation part 12 from the rear side of the wall mounting 64. Thereby the cable sealing device 10 is fixed to the cable sealing and retaining device 60. Particularly, the securing formations 35 projects from the sleeve portion 67 in longitudinal direction thereof at the front side of the wall mounting 64. The securing formations 35 provide two parallel extending outer flat surfaces which can be used as a bolt portion. Accordingly, the fixation of the cable sealing device 10 to the cable sealing and retaining device 60 may be conducted and, thereby, further improved by screwing the lock nut 63 onto the fixation part 12, while holding the securing formations 35 of the sealing part 11, i.e. the cable sealing device 10, by means of a screw-wrench.

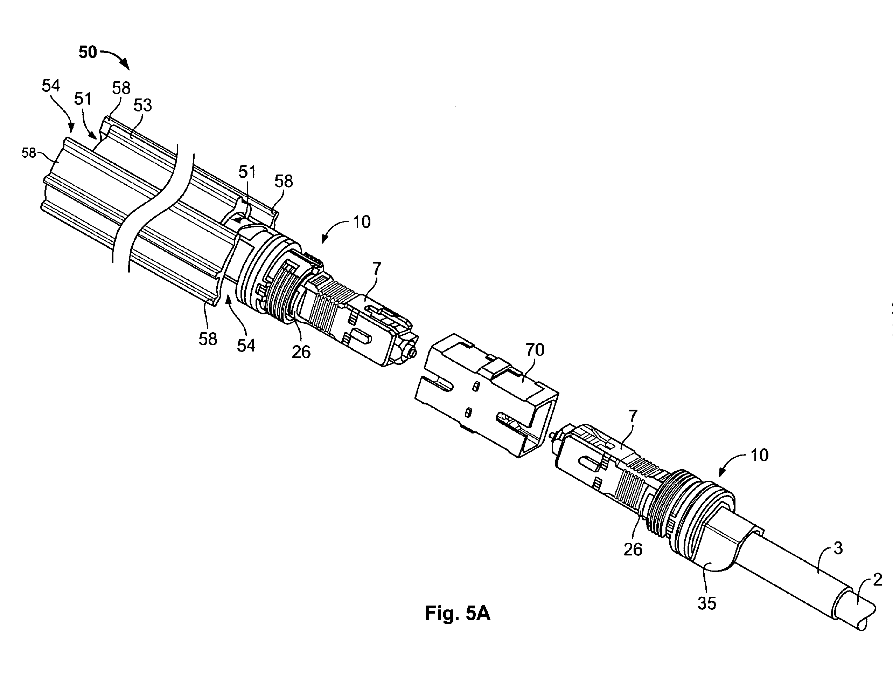

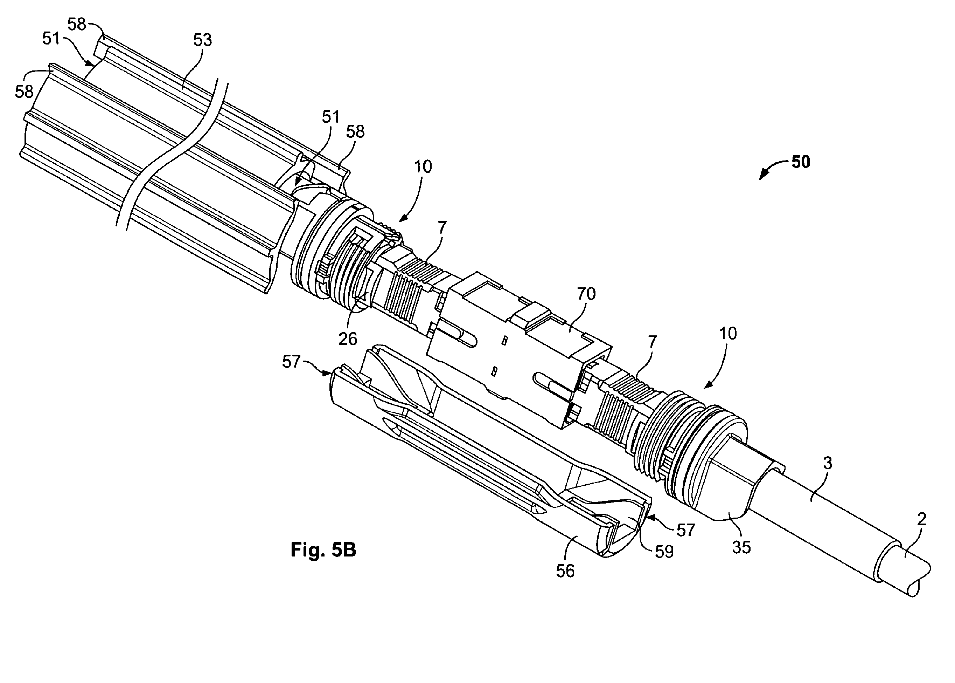

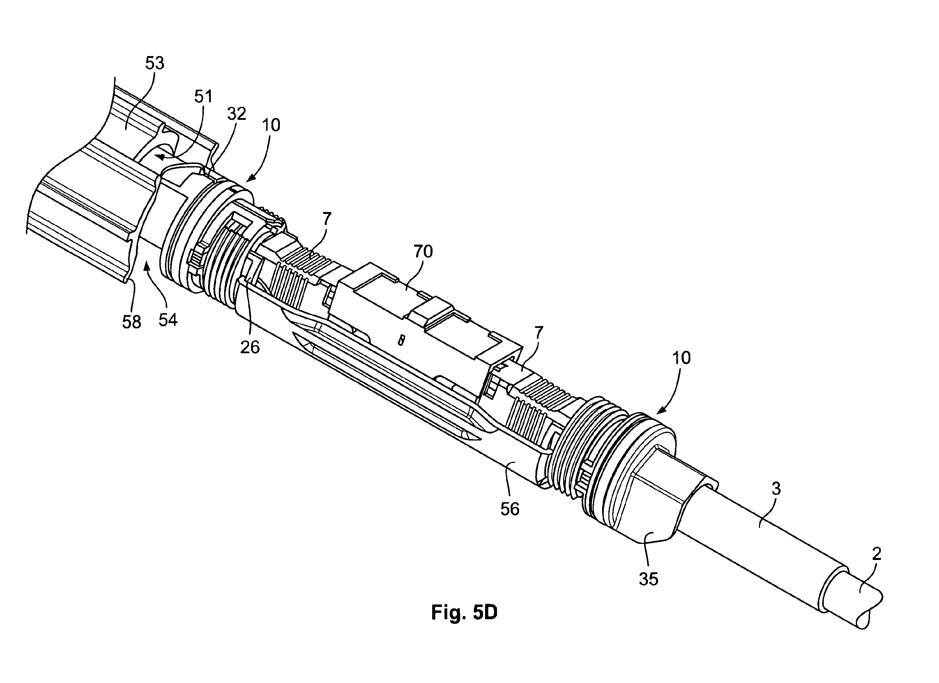

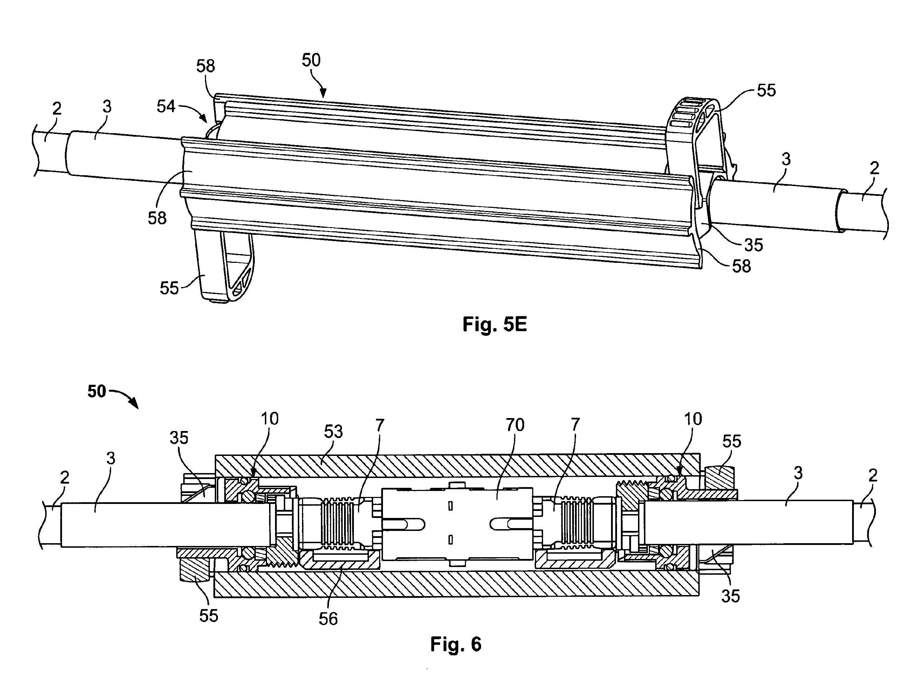

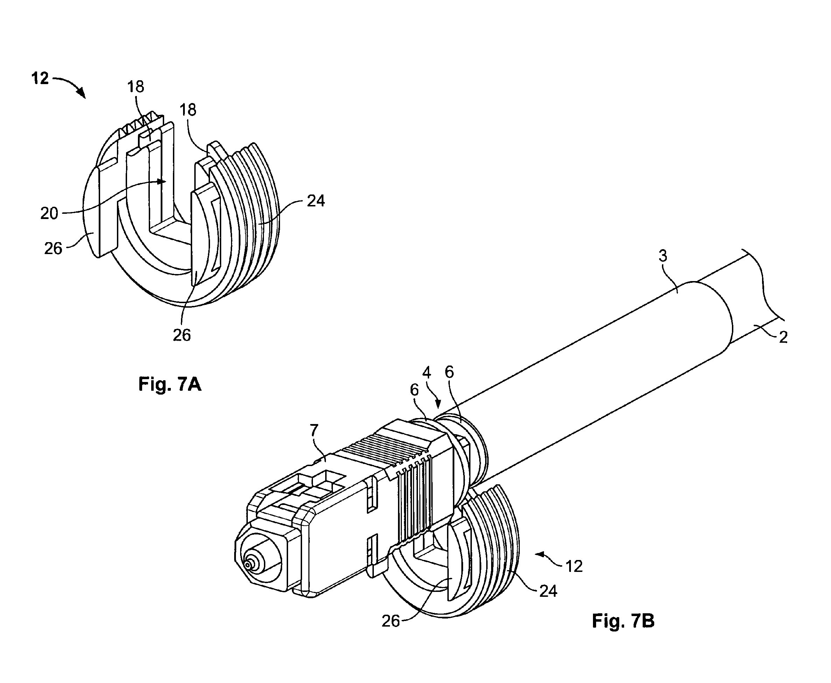

Figs. 5A to 5E show a perspective side view of a cable sealing and retaining device 50 according to a further embodiment. Fig. 6 shows a cross-sectional view of the cable sealing and retaining device 50. Figs. 7A to 7C show a perspective side view of the fixation part 12 of the cable sealing device 10 provided with the cable sealing and retaining device 50 in a pre-installed manner on the cable 2 without and with the sealing part 12 receiving the ring part 13. The cable sealing device shown in Figs. 7A to 7C differs substantially from the cable sealing device 10 shown in Figs. 1A to 1D by a specific configuration of the fixation part 12 and an outer shape of the sealing part 11. Accordingly, the specific shape of the fixation part 12 and of the sealing part 11 dealt with in the following description of the cable sealing and retaining device 50 is to be regarded in combination with the description made in view of Figs. 1A to 1D, wherein similar or corresponding parts providing an equivalent function are identified with similar reference signs.

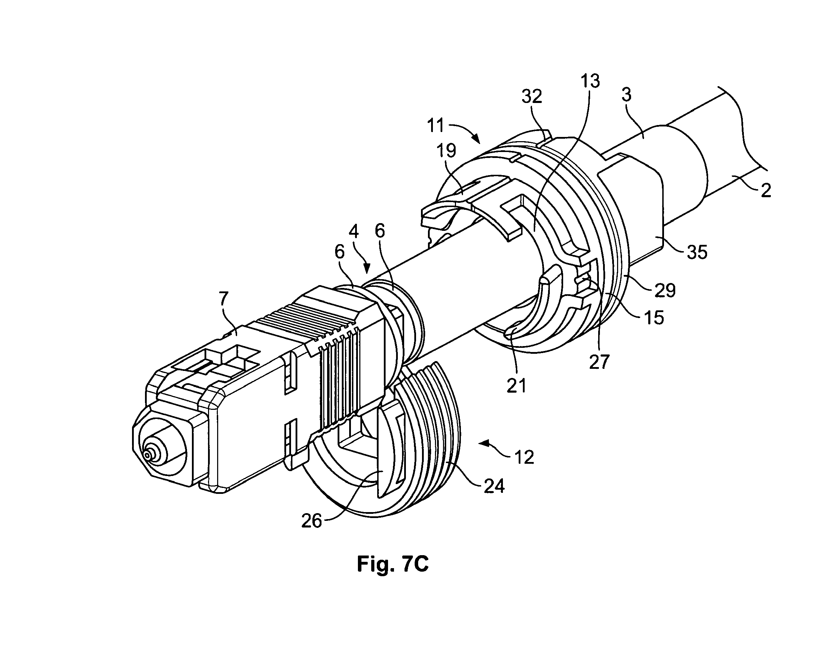

The cable sealing and retaining device 50 comprises a sleeve-shaped housing 53 having two openings 51 at its longitudinal end sides, wherein the housing 53 is adapted to accommodate two cable sealing devices 10, which are each mounted on a connectorized cable 1, and wherein the connectors 7 of the connectorized cables 1 are connected to each other via an adapter 70 inside the housing 53. The connectors 7 are formed of male connectors, wherein the adapter 70 provides female connectors at its longitudinal end sides receiving the male connectors 7, respectively. As shown in Fig. 7C, the cable sealing device 10 has a flange portion 29 with an outer diameter corresponding to an outer diameter of the outer support portion 17 provided for receiving the outer seal ring 15. The cable sealing device 10 may be alternatively combined with the cable sealing device 10 having the flange portion 29 with a larger outer diameter than the outer support portion 17 (see Fig. 1D).

The cable sealing and retaining device 50 further comprises a tension support part 56 formed of a half shell and adapted to receive the connection formed between the connectors 7 and the adapter 70. Particularly, the tension support part 56 comprises three sections, two longitudinal end support sections for receiving the connector part exposed between a longitudinal end side of the cable sealing device 10 and an opposed longitudinal end side of the adapter 70. Between said two longitudinal end support sections, the tension support part 56 comprises a middle section provided for supporting the adapter 70. As particularly shown in Fig. 6, the longitudinal end support sections support the exposed part of the connector 7 and the adapter 70, wherein the support sections, supporting the exposed part of the connector 7, merge towards the middle section by a step portion, thereby providing longitudinal abutment surfaces for the part of the adapter 70 protruding radially from an outer circumferential surface of the connector 7 to an outside thereof.

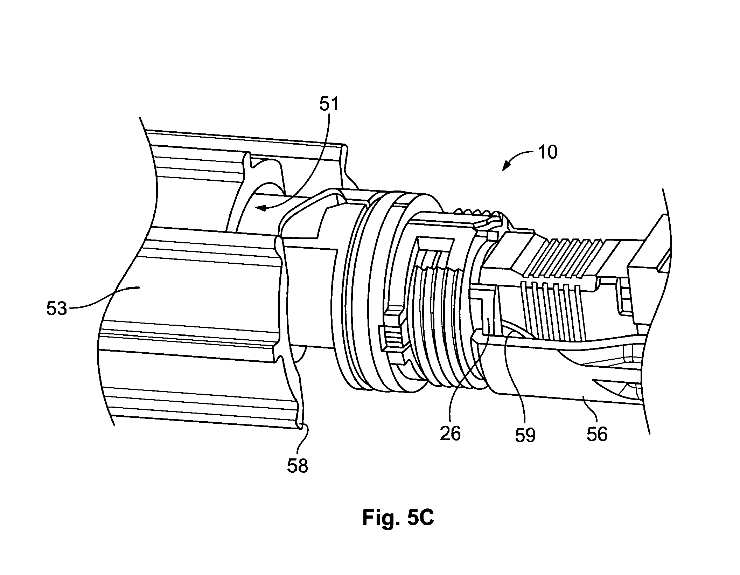

Fig. 5C shows an exploded perspective side view of the cable sealing device 10 connected to the tension support part 56. Particularly and as further shown in Figs. 7A to 7C, the fixation part 12 has at its longitudinal free end side a protrusion 26 providing a slot extending in a straight direction transverse to the longitudinal direction and which engages an associated key 57 formed by a radial inward projecting flange provided at the longitudinal free end side of the tension support part 56. In this context, instead of the fixation part 12, the attaching part 4, even though not shown in the Figures, may be provided with said protrusion 26 at its longitudinal end surface side directing away from the fixation part 12. In this case, the protrusion 26 may be formed in an area accessible from an outer side and being exposed between a side surface of the connector 7 and the longitudinal end surface of the fixation part 12. Accordingly, the following description of the protrusion 26, the formation thereof at the fixation part 12 and the way of connection to the tension support part 56 may also be transferable, respectively, to a configuration in which the attaching part 4 provides the protrusion 26. Particularly, the fixation part 12 is connected to the tension support part 56 by a key-and-slot configuration providing a positive locking in longitudinal direction of the tension support part 56. Moreover, the tension support part 56 has a support wall 59 arranged on a radial inner side of the tension support part 56 and forming a gap with the key-forming flange for receiving a longitudinal free end section of the protrusion 26. Said longitudinal free end section forms also a flange projecting radially outward of the fixation part 12. In an assembled state of the tension support part 56 with the protrusion 26, the support wall 59 is inserted in a space formed at a radial inner side of the protrusion 26, i.e. in a space formed between the radial inner side of the protrusion 26 and a radial outer side of the connector 7. Thereby, the protrusion 26 is supported in radial direction. In case, the attaching part 4 has the protrusion 26, the tension support part 56 may be formed without the support wall 59.

Due to the provision of the tension support part 56, a tension force caused e.g. by a pulling force acting on the cables 2 in longitudinal direction and normally transmitted to the connection formed by the connectors 7 and the adapter 70, can be bypassed via the fixation part 12 (attaching part 4) to the tension support part 56 from one cable sealing device 10 side to the other one without affecting the connection formed therebetween. In other words, the tension force acting on the cables in longitudinal direction will not be further transmitted to the connection formed between the fixation parts 12 (attaching parts 4). Thus, the pulling force will bypass the connection and the same is reliably retained by means of the tension support part 56 secured at its longitudinal end sides to the fixation parts 12 (attaching parts 4). Moreover, a twist between the cable sealing devices 10, i.e. a turning moment on the connection formed between the connectors 7 is also prevented, since a circumferential move of one cable sealing device 10 will cause always a circumferential move of the other cable sealing device 10 without transmitting the turning moment to the connection between the fixation parts 12 (attaching parts 4) due to the connection of the tension support part 56 to the fixation parts 12 (attaching parts 4), respectively.

Fig. 5E shows in particular the housing 53 which has at each longitudinal end side, two elongations 58 forming wall projections extending in parallel from the opening 51 in longitudinal direction and forming a recess portion 54 therebetween, which run transverse to the longitudinal direction of the housing 53. The housing 53 has a longitudinal length sufficient to accommodate the cable sealing devices 10 and the connection formed therebetween, wherein the securing formations 35 of the sealing part 11 project the opening 51 in longitudinal direction of the housing 53 between the recess portion 54. The recess portion 54 receives a clip element 55. The clip element 55 is substantially U-shaped and is moved over the securing formation 35 of the cable sealing device 10 to be clamped thereon. The clip element 55 has at longitudinal free end sides of its legs, engaging pawls for engaging behind end sides of the securing formation 35 to radially fix the clip element 55 to the securing formations 35. Since each recess portion 54 receives a clip element 55, the cable sealing and retaining device 50 and the cable sealing devices 10 are secured to each other in longitudinal and in circumferential direction thereof.

An assembling of the cable sealing and retaining device 50 to the cable sealing devices 10 may be performed as follows, for instance. After mounting the cable sealing devices 10 on the connectorized cables 1 in a manner as described above, the housing 53 is moved over one cable sealing and retaining device 10. Then, the connectors 7 are connected to the adapter 70. Thereafter, the tension support part 56 is secured to the protrusion 26 by the key-and-slot configuration as described above. Subsequent thereto, the housing 53 is moved over the connection formed between the cable sealing devices 10 until both outer seals 15 contact the sealing sections 52 of the housing 53, respectively. Then, the clip elements 55 are fixed to the securing formations 35 of the cable sealing devices 10 from a radial outer side to secure the housing 53 extending over both cable sealing devices 10. Thereby, the connection formed between the cable sealing devices 10 is accommodated inside the housing 53 and sealed by the cable sealing devices 10 inserted into the longitudinal end sides of the housing 53. Further, due to the clip elements 55, the housing 53 is secured in longitudinal and in circumferential direction to the cable sealing devices 10.

The cable sealing and retaining device 50 can be disassembled by removing the clip elements 55 and moving the housing 53 from the cable sealing devices 10. The cable sealing devices 10 can be removed from the connectorized cables 1 by releasing the sealing part 11 from the fixation part 12, removing radially the fixation part 12 from the attaching part 4 and breaking the breakage zone 32 of the sealing part 11 to radially remove said sealing part 11 from the connectorized cable 1.

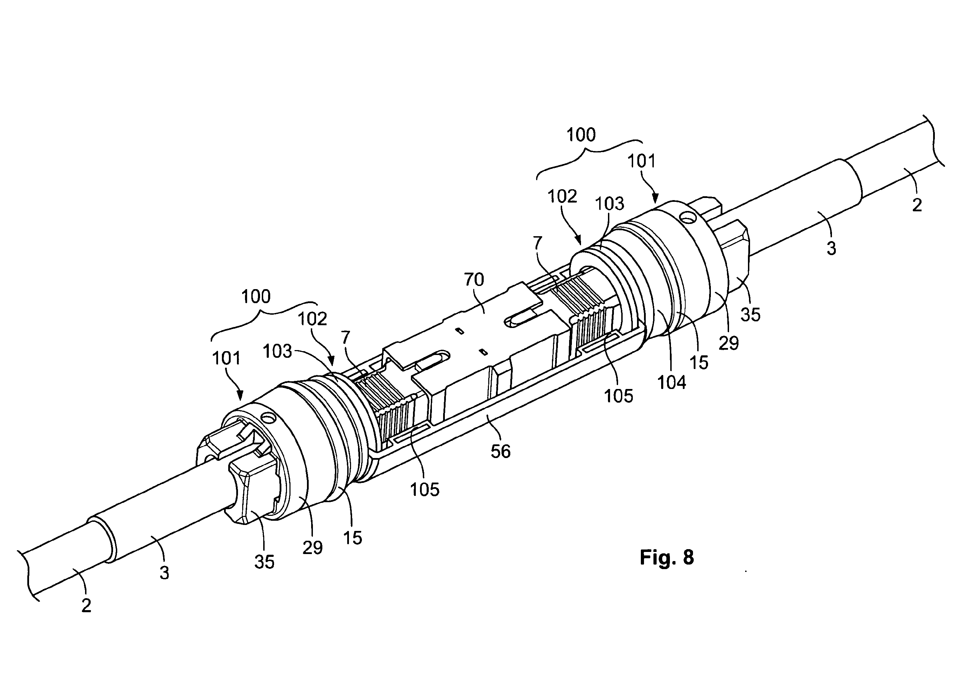

Fig. 8 shows a perspective side view of a cable connection between two cable sealing devices 100 according to a further embodiment usable for the cable sealing and retaining device 50 as described above. The cable sealing device 100 differs substantially from the above-described cable sealing device 10 by an outer shape of the fixation part 102 and of the sealing part 101. Accordingly, only said specific outer shape will be dealt with in the following, wherein further shapes of the fixation part 102 and of the sealing part 101 relate to shapes of the fixation part 12 and the sealing part 11 described above along with the cable sealing device 10, wherein similar reference signs refer to similar parts and portions, respectively. The fixation part 102 provides an interstice 103 extending in circumferential direction for receiving the key-forming flange of the tension support part 56 from a radial outer side to form the key-and-slot-connection between the tension support part 56 and the fixation part 102. Particularly, the interstice 103 provides at its longitudinal end sides an abutment for the longitudinal surfaces of the key-forming flange of the tension support part 56. Thereby, the positive locking in longitudinal direction between the fixation part 102 and the tension support 56 is achieved. Even though the fixation part 102 is shown of a ring shape, the fixation part 102 can adopt any shape suitable for providing the interstice 103. Accordingly, the fixation part 102 may be formed of a C-shaped and connected to the sealing part 102 as described above. Furthermore, the fixation part 102 may be formed of two parts mounted on the attaching part from a radial outer side and connected to each other by latching means, for instance. The sealing part 101 provides an outer shape adapted to the outer shape of the fixation part 102 in order to allow securing therebetween at least in one longitudinal direction side, for instance, by abutment. As shown in Fig. 8, the sealing part 101 has a conical portion 104 between the fixation part 102 and the outer seal 15, wherein an outer diameter of the conical portion 104 decreases in longitudinal direction from the outer support portion of the sealing part 101, which supports the outer seal 15, until the fixation part 102 is reached. According thereto, the sealing part 101 provides a continuous crossing between an outer surface of the fixation part 102 and an outer surface of the outer support portion supporting the outer seal 15. Thus, the housing 53 can be moved in longitudinal direction over the fixation part 102 and the sealing part 101 until the outer seal 15 contacts the sealing section 52 provided inside the housing 53 without getting stuck.

As further shown in Fig. 8, the half-shell shaped tension support part 56 provides abutment portions 105 for abutting against outer sides of the connector 7 in the mounted state of the tension support part 56. The abutment portions 105 projects an inner surface of the tension support part 56 towards the connector 7 side, i.e. towards the longitudinal axis of the tension support part 56. The tension support part 56 provides the abutment portions 105 at opposing sides of each connector 7 received by the tension support part 56. Accordingly, the tension support part 56 abuts in circumferential direction against each side of the connector 7, which is covered by the tension support part 56. In other words, the tension support part 56 is adapted to receive the connector 7 in a fitted manner. Additionally, the abutment portion 105 provides abutment surfaces in longitudinal direction to further improve a positive locking in said direction.

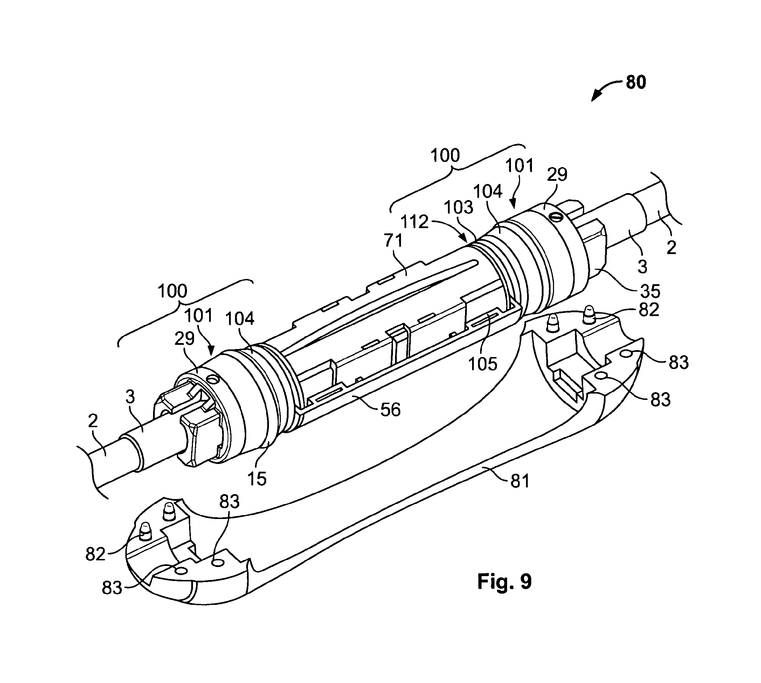

Fig. 9 shows a perspective side view of a cable sealing and retaining device 80 according to a further embodiment provided with two cable sealing devices 100. Same reference signs relate to corresponding portions and parts described above. The cable sealing and retaining device 80 comprises two cable sealing devices 100, each comprising a fixation part 112 which differs from the above-described fixation part 102 by omission of the interstice 103. the interstice 103 is formed between longitudinal end sides of an adapter 71 which extends between the fixation parts 112 of the cable sealing devices 100 and a corresponding longitudinal end side of the fixation part 112. Particularly, the cable connection provided between the longitudinal end sides of the cable sealing devices 100 and radially supported by the tension support part 56 is covered by the adapter 71 having a longitudinal length smaller than a longitudinal distance formed between facing longitudinal end sides of the fixation parts 102. The adapter 71 provides a longitudinal length corresponding to a longitudinal distance between opposing inside surfaces of the key-forming flanges provided with the tension support part 56. Accordingly, the adapter 71 fits into the tension support part 56 between the key-forming flanges formed at longitudinal end sides of the tension support part 56. As the tension support part 56 has a longitudinal length corresponding to a longitudinal distance formed between facing longitudinal end sides of the fixation part 112, the interstice 103 with a longitudinal width adapted to receive the key-forming flange from the radial outer side is formed between the longitudinal end side of the adapter 71 and the facing longitudinal end side of the respective fixation part 112.

The cable sealing and retaining device 80 comprises a housing formed by identical shaped housing halves 81 connectable to the cable sealing devices 100 form a radial outer side. Each housing half 81 provides at its longitudinal end sides support sections for radially supporting the heat shrink tube 3 and the rear end side of the sealing part 101 providing the securing formations 35. Thus, the support sections has an inner surface profile matching an outer surface profile of the heat shrink tube 3 and of the rear end portion of the sealing part 101 comprising the securing formations 35. The housing halves 81 are connected to each other by a pin-hole-connection provided at the longitudinal end sides adjacent to the support sections. Particularly, each longitudinal end side of the housing half 81 provides pins 82 and pin-receiving holes 83 adjacent to the support sections in a radial outward direction with respect to the longitudinal axis of the housing half 81. The pins 82 have an outer shape adapted to press-fit into associated pin-receiving holes 83 to secure the two housing halves 81 against each other.

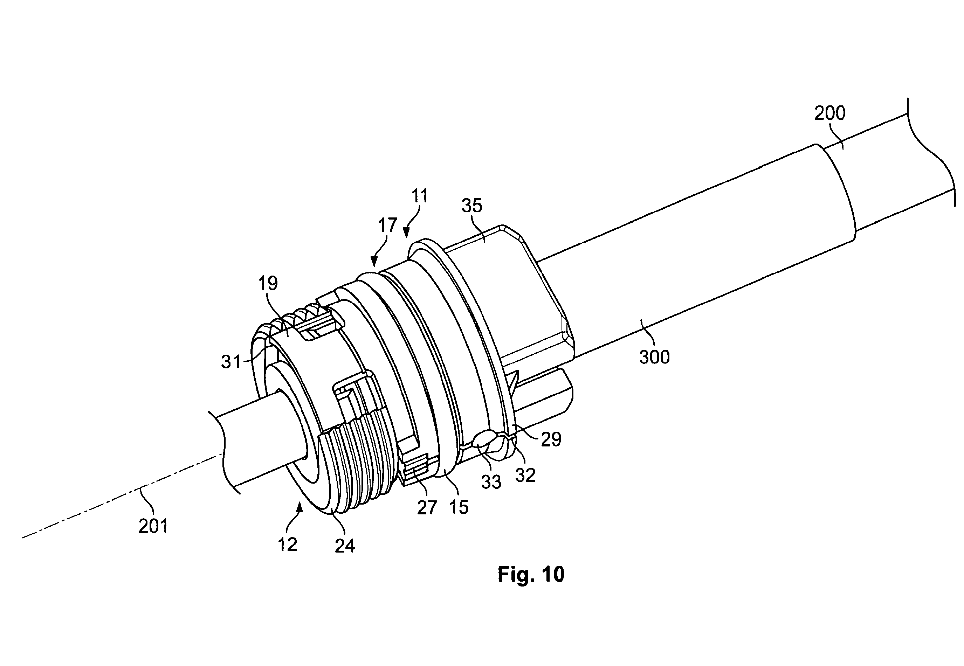

Fig. 10 shows a further embodiment of a connection of the cable sealing device 10 to a cable 200. Same reference signs refer to similar parts as described above. The cable sealing device 10 is particularly mounted on the cable 200 guiding a signal transmitting element 201 and joint to a connection portion of the attaching part at least by means of a heat shrink tube 300, wherein the cable 200 does not be provided with a connector at a longitudinal free end side portion projecting from the fixation part 12. The longitudinal free end side portion of the attaching part provides a connection end 202 by which the cable 200 may be further operated. However, the present invention is not to be construed as to be limited thereto. The attaching part may be generally provided with or without such a connection end and/or with or without the protrusion 26 as described above. Accordingly, the attaching part differs from the attaching part shown particularly in Figs. 1A to 1D by omission of the connector. Hence, the connector does not form a necessary part for mounting the cable sealing device 10 on the cable 2. The cable sealing device 10 may be mountable on any kind of cables in order to retain and/or seal the cable guidable therethrough.

In view of the above, the present invention has been described with reference to specific preferred embodiments. However, a combination of one or more parts as described along with one preferred embodiment with one or more parts as described along with another described preferred embodiment is also feasible.

### Reference list

- 1: connectorized cable
- 2, 200: cable
- 3, 300: heat shrink tube
- 4: attaching part
- 5, 6: positive locking face
- 7: connector
- 10, 100: cable sealing device
- 11, 101: sealing part
- 12, 102, 112: fixation part
- 13: ring part
- 14: inner seal ring
- 15: outer seal ring
- 16: inner support portion
- 17: outer support portion
- 18: first securing means
- 19: second securing means
- 20: opening
- 21: longitudinal protrusion
- 22: notch
- 23, 33: cavity
- 24: external thread
- 26: protrusion
- 27: ring part
- 28: receptacle
- 29: flange portion
- 30: circumferential incision
- 31: tip end
- 32: breakage zone
- 34: gap
- 35: securing formations
- 40, 50, 60, 80: cable sealing and retaining device
- 41, 51, 61: opening
- 42, 52, 62: sealing section
- 43: internal thread engagement
- 44: pulling attachment member
- 45: through hole
- 46, 53: housing
- 47, 67: sleeve portion
- 48: flat surface portion
- 49: accommodating section
- 54: recess portion
- 55: clip element
- 56: tension support part
- 57: slot
- 58: elongation
- 59: support wall
- 63: lock nut
- 64: wall mounting
- 70, 71: adapter
- 81: housing half
- 82: pin
- 83: pin-receiving hole
- 103: interstice
- 104: conical portion
- 105: abutment portion
- 201: signal transmitting element
- 202: connection end

## Claims

1. A cable sealing and retaining device (50) comprising
at least two cable sealing devices (10) with sealing parts (11), each providing a passageway with an inner seal (14) through which a cable (2) is sealingly guidable, and an outer seal (15) arranged on an outer circumference of the sealing part (11);
a housing (53) providing at least two openings (51) with a sealing section (52) arranged inside of the housing (53) and adapted to co-operate with a front section of the sealing part (11) received by the opening (51) to form a sealing between the sealing section (52) and the outer seal (15) coming into contact with the sealing section (52);
**characterized in**
**that** the cable sealing and retaining device (50) provides a tension support part (56) for bypassing a tension acting in longitudinal direction on the cable (2), wherein the tension support part (56) is provided between the cable sealing devices (10) and having a longitudinal length adapted to bridge a longitudinal distance between the two cable sealing devices (10).

2. The cable sealing and retaining device (50) according to claim 1, **characterized in that** the tension support part (56) and the cable sealing devices (10) are connectable to each other at their longitudinal ends.

3. The cable sealing and retaining device (50) according to claim 1 or 2, **characterized in that** the tension support part (56) is connectable to the cable sealing device (10) by interlocking means (57, 26).

4. The cable sealing and retaining device (50) according to claim 3, **characterized in that** the tension support part (56) is connectable to the cable sealing device (10) by a key-and-slot-connection, wherein one of the tension support part (56) and of the cable sealing device (10) comprises the key and wherein the other one thereof has the slot for receiving the key, wherein the key and the slot extend in circumferential direction of the cable sealing device (10) and the tension support part (56), respectively.

5. The cable sealing and retaining device (50) according to claim 4, **characterized in that** the tension support part (56) has a length corresponding to a distance formed between facing longitudinal end sides of the cable sealing devices (10), wherein the key or slot provided with the cable sealing device (10) forms part of a protrusion (26) projecting from the longitudinal end side of the cable sealing device (10).

6. The cable sealing and retaining device (50) according to any one of claims 1 to 5, **characterized in that** the tension support part (56) is half-shell shaped and provides a support section for radially supporting cable connectors (7) forming the connection between the cable terminations.

7. The cable sealing and retaining device (50) according to claim 6, **characterized in that** the tension support part (56) provides a middle support section for supporting an adapter (70) connectable between the cable connectors (7), wherein the middle support section is separated from the support section by a step portion formed at a change-over therebetween, the step portion provides a support surface for the cable connector (7) and an abutment surface extending transverse to the support surface for abutting against a longitudinal end side of the adapter (70).

8. The cable sealing and retaining device (50) according to any of the preceding claims, **characterized in that** the cable sealing device (10) comprises a fixation part (12) arranged at a front end of the sealing part (11), wherein the fixation part (12) is C-shaped to be radially mountable on the cable (2) and comprises first securing means (18) connectable to second securing means (19) provided with the sealing part (11).

9. The cable sealing and retaining device (50) according to claim 8, **characterized in that** the fixation part (12) is connectable to the tension support part (56).

10. The cable sealing and retaining device (50) according to claim 8 or 9, **characterized in that** the fixation part (12) is adapted to be radially mountable on outer positive locking faces (5, 6) of an attaching part (4) having a connection portion to which strain relief elements provided with the cable (2) are attachable, wherein the fixation part (12) provides inner abutment faces adapted to co-operate with the outer positive locking faces (5, 6) so as to provide a positive locking therebetween.

11. The cable sealing and retaining device (50) according to claim 10, **characterized in that** the tension support part (56) is connectable to the attaching part (4).

12. The cable sealing and retaining device (50) according to any of the preceding claims, **characterized in that** the cable sealing and retaining device (50) comprises at least two retaining elements (55), each being associated to the openings (51) and adapted to encompass the cable (2), or mountable on securing formations (35) formed at a rear end of the sealing part (11) and being provided adjacent to longitudinal end sides of the housing (53).

13. The cable sealing and retaining device (50) according to claim 12, **characterized in that** the housing (53) is sleeve-shaped and is projected by two elongations (58) extending in parallel from the opening (51) in longitudinal direction and forming a recess portion (54) therebetween adapted to receive the retaining element (55).

14. The cable sealing and retaining device (50) according to any one of the preceding claims, **characterized in that** the retaining element is formed of a clip element (55) with parallel extending legs elastically movable towards each other and forming a distance therebetween which is smaller than an outer diameter of the cable (2) or of the securing formations (35) to which the retaining element (55) is adapted to be mountable, respectively.

15. A cable connection formed between two cables (2), **characterized by** a cable sealing and retaining device (50) according to any one of the preceding claims.
